# EUROPÄISCHE PATENTSCHRIFT

(11) **EP 2 018 411 B1**
(45) Veröffentlichungstag und Bekanntmachung des Hinweises auf die Patenterteilung: **16.03.2011**
(21) Anmeldenummer: 07728705.0
(22) Anmeldetag: 02.05.2007
(51) Int. Cl.: C09J 7/02, B05D 1/30

(54) **DOPPELSEITIGES KLEBEBAND**
DOUBLE-SIDED ADHESIVE TAPE
RUBAN ADHÉSIF DOUBLE FACE

(30) Priorität: 11.05.2006 EP 06113804
(43) Veröffentlichungstag der Anmeldung: 28.01.2009
(73) Patentinhaber: BASF SE, 67056 Ludwigshafen (DE)
(72) Erfinder: AYDIN, Oral, 68165 Mannheim (DE); DRAGON, Andree, 67346 Speyer (DE); KIRSCH, Stefan, 55268 Nieder-Olm (DE)
(86) Internationale Anmeldenummer: PCT/EP2007/054251
(87) Internationale Veröffentlichungsnummer: WO 2007/131876

(56) Entgegenhaltungen:
- DE-A1- 19 716 466
- DE-A1- 19 913 719
- DE-A1-102004 007 927
- US-A- 4 576 854

## Beschreibung

Haftklebstoffe werden zur Herstellung von selbstklebenden Artikeln, wie Etiketten, Klebebänder oder selbstklebenden Folien verwendet. Die selbstklebenden Artikel bestehen im allgemeinen aus mehreren Schichten, insbesondere einer Trägerschicht, einer Haftklebstoffschicht und einer ablösbaren Antihaftschicht, welche die Haftklebstoffschicht bis zu ihrer Verwendung schützt. Für spezielle Anwendungszwecke werden auch doppelseitige Klebebänder angeboten. Diese Klebebänder bestehen im allgemeinen aus einem stabilen Träger, z. B. ein textiles Gewebe, welches auf beiden Seiten mit einem Haftklebstoff beschichtet ist.

Bei der Herstellung der doppelseitigen Klebebänder wird zunächst eine Seite des Trägers und dann, in einem zweiten Verfahrensschritt, die zweite Seite beschichtet. In der DE 19913719 wird ein sterilisierbares, hautverträgliches Haftklebeband beschrieben aus einem polymeren Trägermaterial auf Polyacrylatbasis, welches beidseitig mit einer Haftklebemischung versehen ist.

Nachteilig bei den bisher bekannten doppelseitigen Klebebändern ist daher ein aufwendiges Herstellungsverfahren. Gewünscht ist ein einfacheres Herstellungsverfahren. Gewünscht ist weiterhin auch die Möglichkeit, andere Trägermaterialen, insbesondere auch dünnere und leichtere Träger zu verwenden.

Aufgabe der vorliegende Erfindung war daher ein einfacheres Verfahren zur Herstellung von doppelseitigen Klebebändern, Aufgabe waren auch verbesserte doppelseitige Klebbänder mit neuem Schichtaufbau.

Demgemäss wurde das folgende mehrschichtige Laminat, die Verwendung des Laminats und ein Verfahren zu seiner Herstellung gefunden. Das mehrschichtige Laminat besteht aus mindestens zwei Haftklebstoffschichten und einer zwischen den Haftklebstoffschichten liegenden Trägerschicht aus einem synthetischen Polymer, wobei die Trägerschicht aus einer Zusammensetzung besteht (kurz Trägerzusammensetzung), die ein Emulsionspolymerisat als Bindemittel enthält (kurz Träger-Polymer genannt), wobei die Glasübergangstemperatur des Träger-Polymeren größer als 0°C ist, und wobei das Laminat herstellbar ist durch ein Verfahren, bei welchem die Haftklebstoffe und die Trägerzusammensetzung als wässrige Dispersion oder Lösung vorliegen und die Beschichtung der Haftklebstoffe und der Trägerzusammensetzung mit einer Mehrfach-Kaskadendüse in einem Verfahrenschritt, d. h. gleichzeitig, erfolgt.

### Zu den Haftklebstoffschichten

Das erfindungsgemäße Laminat enthält mindestens zwei Haftklebstoffschichten, d. h. die beiden Schichten bestehen jeweils aus einem Haftklebstoff.

Bei einem Haftklebstoff handelt es sich um einen bei Raumtemperatur (21°C) permanent klebrigen Klebstoff.

Die nachfolgenden Ausführungen gelten für den Haftklebstoff beider Schichten, soweit nicht konkret auf eine der Schichten Bezug genommen ist.

Der Haftklebstoffe enthält als Bindemittel vorzugsweise ein synthetisches Polymer (im nachfolgenden Haftklebstoff-Polymer genannt).

Als Haftklebstoff-Polymer kommen radikalisch polymerisierte Polymere, Polyester oder Polyaddukte in Betracht. Insbesondere handelt es sich um ein durch radikalische Polymerisation erhältliches Polymer, besonders bevorzugt um ein durch Emulsionspolymerisation erhältliches Polymer. Das Haftklebstoff-Polymer ist ganz besonders bevorzugt ein Emulsionspolymerisat.

Insbesondere ist das Haftklebstoff-Polymer aufgebaut aus radikalisch polymerisierbaren Verbindungen (Monomere). Vorzugsweise besteht es zu mindestens 40 Gew.-%, besonders bevorzugt zu mindestens 60 Gew.-%, ganz besonders bevorzugt zu mindestens 80 Gew.-% aus sogenannten Hauptmonomeren.

Die Hauptmonomeren sind ausgewählt aus C1-C20-Alkyl(meth)acrylaten, Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem C1-C10-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Butadien, Isopren und Chloropren, Ethylen oder Propylen genannt. Aus Butadien oder Isopren erhaltene Polymere oder Copolymere können auch nachträglich hydriert werden.

Als Hauptmonomere bevorzugt sind Vinylester, vorzugsweise Vinylacetat, insbesondere auch in Kombination mit Ethylen (kurz Vinylacetat/Ethylen-Copolymere), Butadien, insbesondere auch in Kombination mit Styrol (kurz Butadien/Styrol-Copolymere) und die C1- bis C10-Alkylacrylate und -methacrylate, insbesondere C1- bis C8-Alkylacrylate und -methacrylate (kurz Polyacrylate) wobei Polyacrylate jeweils besonders bevorzugt sind.

Ganz besonders bevorzugt sind Methylacrylat, Ethylacrylat, n-Butylacrylat, n-Hexylacrylat, Octylacrylat und 2-Etyhlhexylacrylat sowie Mischungen dieser Monomere.

Neben den Hauptmonomeren kann das Haftklebstoff-Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind z. B. auch Hydroxylgruppen enthaltende Monomere, insbesondere C1-C10-Hydroxyalkyl(meth)acrylate, (Meth)acrylamid und Ureidogruppen enthaltende Monomere wie Ureido(meth)acrylate.

Als weitere Monomere seien darüber hinaus Phenyloxyethylglykolmono- (meth-) acrylat, Glydidylacrylat, Glycidylmethacrylat, Amino- (meth-)acrylate wie 2-Aminoethyl-(meth-)acrylat genannt.

Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern. In Betracht kommen insbesondere auch cyclische Lactame wie N-Vinylpyrrolidon oder N-Vinylcaprolactam.

In Betracht kommen auch Haftklebstoffe, deren Eigenschaften durch photochemische Vernetzung, z. B. durch Bestrahlung mit Elektronenstrahlen oder UV Licht eingestellt werden können.(acResin^{®} der BASF)

Die Glasübergangstemperatur (Tg) des Haftklebstoff-Polymeren beträgt vorzugsweise -65 bis +10 °C, besonders bevorzugt -65 bis 0 °C, ganz besonders bevorzugt -65 bis -10 °C, bzw. -65 bis -20 °C, in einer ganz besonders bevorzugten Ausführungsform beträgt die Glasübergangstemperatur -55 bis -30 °C, bzw. -50 bis -40 °C.

Die Glasübergangstemperatur des Polymeren lässt sich nach üblichen Methoden wie Differentialthermoanalyse oder Differential Scanning Calorimetrie (s. z. B. ASTM 3418/82, sog. "midpoint temperature" bestimmen.

Der Haftklebstoff kann allein aus dem Bindemittel (Haftklebstoff-Polymer) bestehen oder auch noch weitere Zusatzstoffe enthalten. In Betracht kommen z. B. sogenannte klebrigmachende Harze (Tackifier).

Tackifier sind z. B. Naturharze, wie Kolophoniumharze und deren durch Disproportionierung oder Isomerisierung, Polymerisation, Dimerisation, Hydrierung entstehenden Derivate. Diese können in ihrer Salzform (mit z. B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Weitere Additive, welche dem Haftklebstoff zugesetzt werden können, sind z. B. Antioxidantien, Füllstoffe, Farbstoffe, Verdicker, Verlaufshilfsmittel.

Der Haftklebstoff besteht, abgesehen von Wasser oder sonstigen Lösemitteln, insbesondere zu mehr als 40 Gew. %, besonders bevorzugt zu mehr als 60 Gew.-% und ganz besonders bevorzugt zu mehr als 80 Gew.-% aus dem Haftklebstoff-Polymer, worunter auch Mischungen von unterschiedlichen Haftklebstoff-Polymeren zu verstehen sind (siehe oben).

Wesentliche Eigenschaften eines Haftklebstoffs sind die Klebrigkeit (Adhäsion) und die innere Festigkeit (Kohäsion).

Dem Fachmann ist bekannt, wie die jeweils gewünschten Haftklebstoff -Eigenschaften eingestellt werden können. Bei Mitverwendung von vernetzenden Monomeren oder externen Vernetzern erhöht sich die innere Festigkeit des Haftklebstoffs, im allgemeinen zum Nachteil der Klebrigkeit. Selbstklebende Artikel, welche mit derartigen Haftklebstoffen beschichtet sind, sind in der Regel rückstandsfrei wieder ablösbar (ablösbare Haftklebstoffe). Andere Haftklebstoffe haben durch Mitverwendung von sehr polaren Monomeren und ggb größerer Mengen Tackifier eine sehr hohe Klebrigkeit, derart ausgerüstete selbstklebende Artikel können kaum wieder abgelöst werden (permanente Haftklebstoffe).

In dem erfindungsgemäßen Laminat können beliebige Haftklebstoffe miteinander kombiniert werden. Es kann sich bei beiden Haftklebstoffschichten, um ablösbare oder um permanente Haftklebstoffe handeln. Es kann sich aber auch bei einer der beiden Haftklebstoffschichten um einen ablösbaren Haftklebstoff handeln und bei der anderen Schicht um einen permanenten Haftklebstoff.

Die Dicke der Haftklebstoffschichten kann jeweils z. B. 1 bis 500 µm betragen; insbesondere beträgt die Dicke im allgemeinen mindestens 3, besonders bevorzugt mindestens 5 µm bzw. mindestens 10 µm; im allgemeinen ist die Dicke nicht größer als 300, besonders bevorzugt nicht größer als 200 bzw. 100 µm.

### Zur Trägerschicht

Die Trägerschicht besteht aus einer Zusammensetzung, die ein synthetisches Polymer in Form eines Emulsionspolymerisats als Bindemittel enthält (kurz Träger-Polymer), wobei die Glasübergangstemperatur des Träger-Polymeren größer als 0°C ist.

Als Träger-Polymer kommen ebenfalls radikalisch polymerisierte Polymere, Polyester oder Polyaddukte in Betracht. Insbesondere handelt es sich um ein durch radikalische Polymerisation erhältliches Polymer, besonders bevorzugt um ein durch Emulsionspolymerisation erhältliches Polymer. Das Träger-Polymer ist ganz besonders bevorzugt ebenfalls ein Emulsionspolymerisat.

Insbesondere ist das Träger-Polymer aufgebaut aus radikalisch polymerisierbaren Verbindungen (Monomere). Vorzugsweise besteht es zu mindestens 40 Gew.-%, besonders bevorzugt zu mindestens 60 Gew.-%, ganz besonders bevorzugt zu mindestens 80 Gew.-% aus sogenannten Hauptmonomeren.

Die Hauptmonomeren sind ausgewählt aus C1-C20-Alkyl(meth)acrylaten, Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem C1-C10-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Butadien, Isopren und Chloropren, Ethylen oder Propylen genannt. Aus Butadien oder Isopren erhaltene Polymere oder Copolymere können auch nachträglich hydriert werden.

Als Hauptmonomere bevorzugt sind die C1- bis C10-Alkyl(meth)acrylate und Vinylaromaten.

Neben den Hauptmonomeren kann auch das Träger -Polymer die oben genannten weiteren Monomere enthalten.

Das Träger-Polymer ist vorzugsweise bei Raumtemperatur (21 °C) kaum, vorzugsweise nicht klebrig, es handelt sich daher vorzugsweise nicht um einen Haftklebstoff.

Demgemäss hat ein in mit der Zusammensetzung des Trägers beschichteter Polyesterfilm (Polyethylentherephthalat, PET) auf Stahl bei 21 °C eine Haftung von insbesondere kleiner 0,5 N/2,5 cm, besonders bevorzugt kleiner 0,2 N/2,5 cm.

Die Haftung wird dabei nach folgender Meßmethode bestimmt (Quickstick-Wert):
Die Träger- Zusammensetzung wird auf 25 mm breite Stücke PET-Folie mit 30 g/m2 (fest) aufgerakelt und 3 Minuten bei 90 °C getrocknet.

Zur Bestimmung des Quickstick-Werts wurde aus einem 17,5 cm langen und 2,5 cm breiten Prüfstreifen durch Einspannen beider Enden in die Klemmbacken einer Zugmaschine eine Schlaufe gebildet, die dann mit einer chromierten Stahloberfläche mit einer Geschwindigkeit von 30 cm/min (Herabsenken der Schlaufe auf das chromierte Stahlblech) in Kontakt gebracht wird. Nach vollflächigem Kontakt wird die Schlaufe nach einer Kontaktzeit von 1 Minute wieder abgezogen und die dabei ermittelte Maximalkraft in N/2,5 cm als Maß für den Quickstick-Wert bestimmt. Die Messung wird bei 20 °C und 50 % relativer Luftfeuchtigkeit durchgeführt.

Der erhaltene Wert ist ein Maß für die Haftung und damit für die Klebrigkeit. Die Träger Zusammensetzung ist daher vorzugsweise kaum klebrig bzw. besonders bevorzugt nicht klebrig.

Die Glasübergangstemperatur (Tg) des Träger-Polymeren ist größer 0 °C, besonders bevorzugt größer 20 °C; sie beträgt z. B. größer 0 bis +100 °C, ganz besonders bevorzugt +20 bis +100 °C, bzw. +30 bis +100 °C, in einer ganz besonders bevorzugten Ausführungsform beträgt die Glasübergangstemperatur +40 bis +100°C.

Die Glasübergangstemperatur des Polymeren wird wie oben bestimmt.

Die Träger-Zusammensetzung kann allein aus dem Bindemittel (Träger-Polymer) bestehen oder auch noch weitere Zusatzstoffe enthalten. In Betracht kommen z. B. Antioxidantien, Füllstoffe, Farbstoffe, Verdicker oder Verlaufshilfsmittel.
Insbesondere besteht die Träger-Zusammensetzung zu mindestens 60 Gew. %, besonders bevorzugt zu mindestens 80 Gew. % und ganz besonders bevorzugt zu mindestens 90 Gew. % aus dem Träger- Polymer.

Die Dicke der Träger-schicht kann insbesondere 1 bis 500 µm betragen; insbesondere beträgt die Dicke im allgemeinen mindestens 5, besonders bevorzugt mindestens 10 µm, ganz besonders bevorzugt mindestens 20 bzw. mindestens 30 µm; im allgemeinen ist die Dicke nicht größer als 300, besonders bevorzugt nicht größer als 200 bzw.100 µm.

### Herstellung der Haftklebstoffe und der Träger-zusammensetzung

Die entsprechenden Haftklebstoff-Polymere und das Träger-Polymer können durch übliche Polymerisationsmethoden hergestellt werden. Bevorzugt werden sowohl die Haftklebstoff- Polymere als auch das Träger-Polymer durch Emulsionspolymerisation hergestellt. Das Haftklebstoff-Polymer und das Träger Polymer liegt daher vorzugsweise als Emulsionspolymerisat, d.h. als wässrige Polymerdispersion vor.

Weitere Bestandteile der Haftklebstoffe und der Trägerzusammensetzung können in die wässrigen Polymerdispersionen eingerührt werden.

Die Haftklebstoffe und die Trägerzusammensetzung liegen daher vorzugsweise als wässrige Haftklebstoff bzw. Trägerzusammensetzung vor.

Der Feststoffgehalt der wässrigen Haftklebstoffe und Trägerzusammensetzung beträgt vorzugsweise mindestens 20, besonders bevorzugt mindestens 30, ganz besonders bevorzugt mindestens 40 Gew. %, im allgemeinen beträgt er nicht mehr als 80 Gew., insbesondere nicht mehr als 75 Gew. %, bzw. nicht mehr als 70 Gew. %.

### Aufbau des mehrschichtigen Laminats insgesamt

Das mehrschichtige Laminat kann weitere Schichten enthalten. Insbesondere können die Haftklebstoffschichten mit einer Antihaftschicht (mit der nicht haftenden, d.h. ablösbaren Seite zum Haftklebstoff hin) abgedeckt sein. Bei der Antihaftschicht handelt es sich insbesondere um silikonisiertes Papier oder eine silikonisierte Folie. Die Antihaftschicht soll die Haftklebstoffschicht bis zur Verwendung schützen. Unmittelbar vor der Verwendung wird die Antihaftschicht entfernt.

Beide Haftklebstoffschichten können entsprechend mit einer ablösbaren Antihaftschicht abgedeckt sein. Wenn das Laminat aufgerollt werden soll, reicht es aus, nur eine Seite mit einer Anihaftschicht abzudecken, diese Antihaftschicht sollte aber auf beiden Seiten nicht haftend, d. h z.B. mit einer Silikonbeschichtung ausgerüstet sein. Die obere Seite dieser Antihaftschicht kommt beim Aufrollen in Kontakt mit der unteren Haftklebstoffbeschichtung und schützt diese gleichzeitig.

Das mehrschichtige Laminat hat (ohne die wiederablösbaren Antihaftschichten) vorzugsweise insgesamt eine Schichtdicke von 30 µm bis 3 mm, besonders bevorzugt von 50 µm bis 500 µm, ganz besonders bevorzugt von 60 µm bis 200 µm.

### Herstellung des Laminats

Das mehrschichtige Laminat ist durch ein Beschichtungsverfahren erhältlich, bei dem die Haftklebstoffe und die Trägerzusammensetzung als wässrige Dispersion oder Lösung vorliegen (siehe oben) und beschichtet werden.

Bei dem verfahren zur Herstellung kann man daher vorzugsweise von den wässrigen Haftklebstoffen und der wässrigen Trägerzusammensetzung ausgehen, wie sie oben definiert sind, beschichtet diese auf eine Antihaftschicht (z. B. silikonisiertes Papier oder Folie) und trocknet die erhaltene Beschichtung.

Die Beschichtung der wässrigen Haftklebstoffe und der wässrigen Trägerzusammensetzung erfolgt mit einer Mehrfach-Kaskadendüse in einem Verfahrenschritt, d. h. gleichzeitig.

Ein dazu geeignetes Beschichtungsverfahren ist aus DE-A- 10 2004 007 927, veröffentlicht am 01.09.2005, bekannt. Bei diesem Verfahren wird eine Mehrfachkaskadendüse verwendet.

Das mehrschichtige Laminat wird demnach bevorzugt durch ein Verfahren hergestellt, bei dem die mindestens drei fließfähigen, vorzugsweise wässrigen Zusammensetzungen (zwei Haftklebstoffe und eine Trägerzusammensetzung), kontinuierlich auf ein bahnförmiges Substrat, vorzugsweise eine Antihaftschicht, beschichtet werden. Dabei erfolgt die Beschichtung unter Verwendung einer Mehrfachkaskadendüse.

Die Geschwindigkeit des bahnförmigen Trägers beträgt bevorzugt 30 bis 1500 Meter pro Minute, besonders bevorzugt 50 bis 60, ganz besonders bevorzugt 80 bis 400 Meter pro Minute.

Die Haftklebstoffe und die Trägerzusammensetzung befinden sich in unterschiedlichen Vorratsgefäßen und werden; diese Vorratsgefäße speisen einen flüssigen Film aus dem jeweiligen Haftklebstoff und der Trägerzusammensetzung.

Wesentliches Merkmal der Mehrfachkaskadendüse ist, dass die aus den einzelnen zu beschichtenden Filmen ein Gesamtfilm gebildet wird. In diesem Gesamtfilm liegen die einzelnen Filme in der räumlichen Anordnung vor, wie sie später in dem mehrschichtigen Laminat gewünscht ist. Der Gesamtfilm wird von der Mehrfachkaskadendüse auf den sich bewegenden bahnförmigen Träger gegeben.

Vorzugsweise handelt es sich bei dem Verfahren um ein Slide coating- Verfahren. Slide Coating- Verfahren und , alternativ dazu, Slot - Coating Verfahren sind z. B. in" Liquid Film Coating, Chapman & Hall, London 1997, Kapitel 11a "Slot coating" und 11b "Slide coating" beschrieben. Beim Slide-coating gleitet der Gesamtfilm über eine Fläche, z. B. Metallfläche (sliding) und wird danach auf dem Substrat abgelegt.

Im Gegensatz dazu wird der Gesamtfilm bei einem slot coating Verfahren aus einem Schlitz oder Düse direkt, d. h. ohne sliding, auf das Substrat gegeben.

Bevorzugt handelt es sich weiterhin um ein Vorhangbeschichtungsverfahreen (Curtain Coating). Beim Vorhangbeschichtungsverfahren wird ein frei fallender Filmvorhang auf dem Substrat abgelegt. Damit der Filmvorhang frei fallen kann, muss der Abstand zwischen Düse oder sonstiger Austrittsöffnung und dem sich bewegenden Substrat größer als die zu beschichtende Schichtdicke sein.

Besonders bevorzugt handelt es sich um ein Slide coating Verfahren in Kombination mit einem Vorhangbeschichtungsverfahren. Die Kaskadendüse und ihre Stellung zum Substrat ist in Abbildungen 4.1 (slide coating) und Abbildung 4.2 (slide coating mit Vorhangbeschichtung) von DE-A 10 2004 007 927 wiedergegeben.

### Verwendung

Das mehrschichtige Laminat eignet sich als selbstklebender Artikel, insbesondere als doppelseitiges Klebeband. Die Erfindung erlaubt eine einfache Herstellung von selbstklebenden Artikeln, insbesondere doppelseitigen Klebebändern. Die doppelseitigen Klebbänder sind einfach aufgebaut; auch als Träger kann ein synthetisches Polymer verwendet werden. Die selbstklebenden Artikel, bzw. Klebbänder sind reißfest und haben gute mechanische Eigenschaften und haben gute Klebeeigenschaften.

### Beispiele

### Herstellung eines mehrschichtigen Laminats

Zusammensetzung der einzelnen Schichten:
1. Haftkleber:
   Acronal® V 215, eine wässrige Dispersion eines carboxylgruppenhaltigen Polyacrylats der BASF für Haftklebstoffe, Feststoffgehalt 69 Gew. %, Glasübergangstemperautur-43 °C; der Dispersion wurden 1,0 Gew. % Benetzungsmittel und 0,2 Gew. % Verdicker, bezogen auf das Polymer (fest) zugesetzt.
2. Haftkleber:
   Acronal® A 110 215, eine wässrige Dispersion eines carboxylgruppenhaltigen Polyacrylats der BASF für Haftklebstoffe, Feststoffgehalt 55 Gew. %, Glasübergangstemperautur-55 °C; der Dispersion wurden 1,0 Gew. % Benetzungsmittel und 0,2 Gew. % Verdicker, bezogen auf das Polymer (fest) zugesetzt.

### Trägerzusammensetzung

Acronal® S 728, eine wässrige Dispersion eines styrolhaltigen Polyacrylats der BASF für Beschichtungsmassen, Feststoffgehalt 50 Gew. %, Glasübergangstemperautur 15 °C; der Dispersion wurden 1,0 Gew. % Benetzungsmittel und 0,2 Gew. % Verdicker, bezogen auf das Polymer (fest) zugestzt

### Verfahren zur Herstellung:

Aus den beiden Haftklebstoffen und der Trägerzusammensetzung wurde ein mehrschichtiges Laminat in einem kontinuierlichen Beschichtungsverfahren hergestellt.

Als bahnförmiger Träger wurde eine silikonisierte Polymerfolie verwendet. Die Geschwindigkeit des bahnförmigen Trägers war Meter/Minute.

Die beiden Haftkleber und die Trägerzusammensetzung wurden mit einer Mehrfach-Kaskadendüse, wie sie in DE-A 10 2004 007 927, Figur 4.2 beschichtet. Bei dem Verfahren handelt es sich um eine Slide-coating Verfahren in Kombination mit einem Curtain-coating Verfahren. Die beiden Haftkleber und die Trägerzusammensetzung werden in getrennten Gefäßen bevorratet; in der Mehrfach-Kaskadendüse zu einem Film geformt; die drei Filme werden zusammengeführt, so dass sie aufeinander liegen und gemeinsam als Gesamtfilm beschichtet werden. Der Gesamtfilm gleitet in der Mehrfach-Kaskadendüse zunächst über eine Metallfläche, danach fällt er als Vorhang auf die sich senkrecht zum fallenden Vorhang fortbewegende Trägerbahn.

Die Beschichtungsmengen betrugen:
1. Haftklebstoffschicht: 26,8 g/m2 (trocken, entspricht Schichtdicke von 26,8 µm) Trägerzusammensetzung: 50 g/m2 (trocken, entspricht Schichtdicke von 50 µm)
2. Haftklebstoffschicht: 19 g/m2 (trocken, entspricht Schichtdicke von 19 µm)

Die erhaltene Mehrfachbeschichtung wird kontinuierlich getrocknet, wozu die beschichtete Bahn durch eine Trockenapparatur geführt wird. Nach der Trocknung wird auf die obere Haftklebstoffschicht noch eine weitere silikonisierte Polyethylenfolie abgelegt.

Das erhaltene mehrschichtige Laminat hat folgenden Aufbau, wobei die Reihenfolge der Schichten der räumlichen Anordnung entspricht:
Silikonisierte Folie (wird vor Verwendung abgezogen)
   1. Haftklebstoffschicht
      Trägerschicht
   2. Haftklebstoffschicht
      Silikonisierte Folie (wird vor Verwendung abgezogen)

Das mehrschichtige Laminat eignet sich als doppelseitiges Klebeband.

Die 1. Haftklebstoffschicht ist so eingestellt, dass sie eine hohe Adhäsion und Kohäsion hat. Sie eignete sich für besonders feste, permanente Verklebungen (Schälfestigkeit auf Glas nach 1 Tag Lagerung bei Raumtemperatur: 32 N/25 mm, Scherfestigkeit, gemessen durch Aufkleben eines 25 x 25 mm großen Teststreifens auf Glas, Belastung des Streifens mit einem Gewicht von 1 kg, Zeit bis zum Ablösen des Streifens: mehr als 24 Stunden).

Die 2. Die 1. Haftklebstoffschicht ist so eingestellt, dass sie eine geringe Adhäsion hat, sie eignet sich für wiederablösbare Verklebungen (Schälfestigkeit 2,3, Scherfestigkeit 1,7 Stunden).

Das mehrschichtige Laminat hat eine sehr gute mechanische Festigkeit (Reißfestigkeit) und ist leicht handhabbar.

## Patentansprüche

1. Mehrschichtiges Laminat aus mindestens zwei Haftklebstoffschichten und einer zwischen den Haftklebstoffschichten liegenden Trägerschicht aus einem synthetischen Polymer, **dadurch gekennzeichnet, dass** die Trägerschicht aus einer Zusammensetzung besteht (kurz Trägerzusammensetzung), die ein Emulsionspolymerisat als Bindemittel enthält (kurz Träger-Polymer genannt), wobei die Glasübergangstemperatur des Träger-Polymeren größer als 0°C ist, und wobei das Laminat herstellbar ist durch ein Verfahren, bei welchem die Haftklebstoffe und die Trägerzusammensetzung als wässrige Dispersion oder Lösung vorliegen und die Beschichtung der Haftklebstoffe und der Trägerzusammensetzung mit einer Mehrfach-Kaskadendüse in einem Verfahrenschritt, d. h. gleichzeitig, erfolgt.

2. Mehrschichtiges Laminat gemäß Anspruch 1, **dadurch gekennzeichnet, dass** die beiden Haftklebstoffschichten aus einem Haftklebstoff bestehen, der ein synthetisches Polymer als Bindemittel enthält (kurz Haftklebstoff-Polymer genannt).

3. Mehrschichtiges Laminat gemäß Anspruch 1 oder 2, **dadurch gekennzeichnet, dass** es sich bei dem Haftklebstoff-Polymer um ein Emulsionspolymerisat handelt.

4. Mehrschichtiges Laminat gemäß einem der Ansprüche 1 bis 3, **dadurch gekennzeichnet, dass** die Träger-Zusammensetzung nicht klebrig ist.

5. Mehrschichtiges Laminat gemäß einem der Ansprüche 1 bis 4, **dadurch gekennzeichnet, dass** die Schichtdicke der Haftklebstoffschichten und der Trägerschicht jeweils 1 bis 100 µm beträgt.

6. Mehrschichtiges Laminat gemäß einem der Ansprüche 1 bis 5, **dadurch gekennzeichnet, dass** das mehrschichtige Laminat weitere Schichten enthält, insbesondere auf einer oder auf beiden Seiten eine ablösbare Antihaftschicht.

7. Verfahren zur Herstellung eines mehrschichtigen Laminats aus mindestens zwei Haftklebstoffschichten und einer zwischen den Haftklebstoffschichten liegenden Trägerschicht aus einem synthetischen Polymer, **dadurch gekennzeichnet, dass** die Haftklebstoffe und die Trägerzusammensetzung als wässrige Dispersion oder Lösung vorliegen, beschichtet und anschließend getrocknet werden, wobei die Beschichtung der Haftklebstoffe und der Trägerzusammensetzung mit einer Mehrfach-Kaskadendüse in einem Verfahrenschritt, d. h. gleichzeitig, erfolgt.

8. Verfahren gemäß Anspruch 7, **dadurch gekennzeichnet, dass** es sich bei dem Beschichtungsverfahren um ein sliding- Verfahren handelt.

9. Verfahren gemäß einem der Ansprüche 7 bis 8, **dadurch gekennzeichnet, dass** es sich bei dem Beschichtungsverfahren um ein VorhangBeschichtungsverfahren (curtain coating) handelt.

10. Verwendung des mehrschichtigen Laminats gemäß einem der Ansprüche 1 bis 6 als selbstklebender Artikel.

11. Verwendung des mehrschichtigen Laminats gemäß einem der Ansprüche 1 bis 6 als doppelseitiges Klebeband.

## Claims

1. A multilayer laminate comprising at least two pressure-sensitive adhesive layers and a carrier layer located between the pressure-sensitive adhesive layers and comprising a synthetic polymer, wherein the carrier layer is composed of a composition (carrier composition for short) which comprises an emulsion polymer as binder (called carrier polymer for short), the glass transition temperature of the carrier polymer being greater than 0°C, and the laminate being producible by a method in which the pressure-sensitive adhesives (PSAs) and the carrier composition are present in aqueous dispersion or solution form and the coating of the PSAs and of the carrier composition takes place using a multiple cascade die in one method step, i.e., simultaneously.

2. The multilayer laminate according to claim 1, wherein the two pressure-sensitive adhesive layers are composed of a PSA which comprises a synthetic polymer as binder (called PSA polymer for short).

3. The multilayer laminate according to claim 1 or 2, wherein the PSA polymer is an emulsion polymer.

4. The multilayer laminate according to any one of claims 1 to 3, wherein the carrier composition is not tacky.

5. The multilayer laminate according to any one of claims 1 to 4, wherein the thickness of the PSA layers and of the carrier layer is in each case 1 to 100 µm.

6. The multilayer laminate according to any one of claims 1 to 5, comprising further layers, in particular on one or both sides a detachable anti-stick layer.

7. A method of producing a multilayer laminate comprising at least two PSA layers and a carrier layer located between the PSA layers and comprising a synthetic polymer, which comprises the PSAs and the carrier composition being present in aqueous dispersion or solution form, coating them and then carrying out drying, the coating of the PSAs and of the carrier composition taking place using a multiple cascade die in one method step, i.e., simultaneously.

8. The method according to claim 7, wherein the coating method is a sliding method.

9. The method according to any one of claims 7 to 8, wherein the coating method is a curtain coating method.

10. The use of the multilayer laminate according to any one of claims 1 to 6 as a self-adhesive article.

11. The use of the multilayer laminate according to any one of claims 1 to 6 as a double-sided adhesive tape.

## Revendications

1. Stratifié multicouche à base d'au moins deux couches adhésives sensibles à la pression et d'une couche support située entre les couches adhésives sensibles à la pression à base d'un polymère synthétique, **caractérisé en ce que** la couche support est constituée d'une composition (en abréviation composition support) qui contient un polymère en émulsion en tant que liant (nommé en abréviation polymère support), la température de transition vitreuse du polymère support étant supérieure à 0 °C et le stratifié pouvant être fabriqué par un procédé selon lequel les adhésifs sensibles à la pression et la composition support se présentent sous la forme d'une dispersion ou solution aqueuse et le revêtement des adhésifs sensibles à la pression et de la composition support a lieu avec une buse à cascades multiples en une étape de procédé, c.-à-d. simultanément.

2. Stratifié multicouche selon la revendication 1, **caractérisé en ce que** les deux couches adhésives sensibles à la pression sont constituées d'un adhésif sensible à la pression qui contient un polymère synthétique en tant que liant (nommé en abréviation polymère adhésif sensible à la pression).

3. Stratifié multicouche selon la revendication 1 ou 2, **caractérise en ce que** le polymère adhésif sensible à la pression est un polymère en émulsion.

4. Stratifié multicouche selon l'une quelconque des revendications 1 à 3, **caractérisé en ce que** la composition support n'est pas collante.

5. Stratifié multicouche selon l'une quelconque des revendications 1 à 4, **caractérisé en ce que** l'épaisseur de couche des couches adhésives sensibles à la pression et de la couche support est à chaque fois de 1 à 100 µm.

6. Stratifié multicouche selon l'une quelconque des revendications 1 à 5, **caractérisé en ce que** le stratifié multicouche contient des couches supplémentaires, notamment une couche anti-adhérente détachable sur un ou les deux côtés.

7. Procédé de fabrication d'un stratifié multicouche à base d'au moins deux couches adhésives sensibles à la pression et d'une couche support située entre les couches adhésives sensibles à la pression à base d'un polymère synthétique, **caractérisé en ce que** les adhésifs sensibles à la pression et la composition support se présentent sous la forme d'une dispersion ou solution aqueuse, sont revêtus, puis séchés, le revêtement des adhésifs sensibles à la pression et de la composition support ayant lieu avec une buse à cascades multiples en une étape de procédé, c.-à-d. simultanément.

8. Procédé selon la revendication 7, **caractérisé en ce que** le procédé de revêtement est un procédé de glissement.

9. Procédé selon l'une quelconque des revendications 7 à 8, **caractérisé en ce que** le procédé de revêtement est un procédé d'application au rideau (curtain coating).

10. Utilisation du stratifié multicouche selon l'une quelconque des revendications 1 à 6 en tant qu'article auto-adhésif.

11. Utilisation du stratifié multicouche selon l'une quelconque des revendications 1 à 6 en tant que ruban adhésif double face.
